(19) **Europäisches Patentamt / European Patent Office / Office européen des brevets**

(11) **EP 3 391 698 B1**

(12) **EUROPEAN PATENT SPECIFICATION**

(45) Date of publication and mention of the grant of the patent:
**03.02.2021 Bulletin 2021/05**

(21) Application number: **16825351.6**

(22) Date of filing: **15.12.2016**

(51) Int Cl.:
***H04W 72/04*** *(2009.01)*

(86) International application number:
**PCT/EP2016/081199**

(87) International publication number:
**WO 2017/102950 (22.06.2017 Gazette 2017/25)**

(54) **ALLOCATION OF NOMA RESOURCES**

ZUWEISUNG VON NOMA-RESSOURCEN

ATTRIBUTION DE RESSOURCES NOMA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2015 EP 15200140**

(43) Date of publication of application:
**24.10.2018 Bulletin 2018/43**

(73) Proprietor: **IPCom GmbH & Co. KG**
**82049 Pullach (DE)**

(72) Inventors:
- **BIENAS, Maik**
**38170 Schöppenstedt (DE)**
- **SCHMIDT, Andreas**
**38124 Braunschweig (DE)**
- **HANS, Martin**
**31162 Bad Salzdetfurth (DE)**

(74) Representative: **Tomlinson, Edward James**
**Frohwitter**
**Patent- und Rechtsanwälte**
**Possartstrasse 20**
**81679 München (DE)**

(56) References cited:
**WO-A1-2014/025292      WO-A1-2015/167714**
**US-A1- 2015 358 971**

- **BENJEBBOUR ANASS ET AL: "Concept and practical considerations of non-orthogonal multiple access (NOMA) for future radio access", 2013 INTERNATIONAL SYMPOSIUM ON INTELLIGENT SIGNAL PROCESSING AND COMMUNICATION SYSTEMS, IEEE, 12 November 2013 (2013-11-12), pages 770-774, XP032541968, DOI: 10.1109/ISPACS.2013.6704653**
- **CHINA TELECOM: "Preliminary system-level evaluation results for superposition transmission", 3GPP DRAFT; R1-154402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001705, Retrieved from the Internet: URL:http://www.3gpp.org/ftp/Meetings_3GPP_ SYNC/RAN1/Docs/ [retrieved on 2015-08-23]**

**Description**

The present invention relates to non-orthogonal multiple access mobile communication networks and in particular a mechanism for enabling non-orthogonal communication.

Current mobile communication systems like GSM, UMTS, HSPA and LTE use orthogonal radio resources to distinguish signals from and to different users. That means, that each user equipment, UE, obtains individual radio resources for exclusive usage that will not interfere with other radio resources. A radio resource is a certain portion of the frequency spectrum at a certain instance in time.

A new multiple access technology is currently being studied at 3GPP, see 3GPP document RP-151100 "Study on Downlink Multiuser Superposition Transmission for LTE". One proposed solution for this study is called Non-orthogonal Multiple Access, NOMA. The key principal of NOMA is that the same radio resources are assigned to multiple users.

In order to distinguish signals being received from multiple sources using the same radio resource, the received power of the different signals is used. The NOMA principle could be applied in the Downlink and Uplink direction. If NOMA is applied in the Uplink direction, the receiver is located in the base station (i.e. the eNB in LTE). In this case, the received data of each user from the same NOMA resources has to be decoded successively starting with the signal received with highest power. After that, this portion of the signal is subtracted from the received signal and the receiver decodes the user data received with the second highest received power from the remaining signal, and so on until all data from this resource are decoded.

It has be shown in various studies, that in situations of high signal to interference plus noise ratio, SINR, the NOMA method outperforms conventional orthogonal multiple access schemes.

WO 2015/029729 A1 describes an exemplary NOMA system. It describes a method to determine whether to assign non-orthogonal or orthogonal resources and a method to instruct UEs to either use power control mode for non-orthogonal resources or power control mode for orthogonal resources.

US 2014/0328298 A1 describes a method in the UE to measure the uplink path loss and to define the uplink transmit power accordingly.

US 2015/0358971 A1 describes a method for facilitating non-orthogonal communication in which channel estimates received from multiple UEs are used to select candidate UEs for non-orthogonal operation.

WO 2014/025292 A1 describes the formation of timing advance groups comprising UEs having similar timing advance settings. A timing advance value is then assigned to the group.

NOMA is further described in a paper by Anass Benjebbour et al in Proceedings 2013 International Symposium on Intelligent Signal Processing and Communication Systems, IEEE, pp 770-774, WO 2015/167714 A1 and 3GPP TSG RAN WG1 Meeting #82, document R1-154402.

A failing with the NOMA systems described in the documents cited above is that it is not specified how to find appropriate UEs that are suited to efficiently share NOMA resources in Uplink direction and it is not specified how to perform power control and how to select the modulation and coding scheme in case of NOMA operation without the need to change the UE behaviour.

The present invention provides a method of determining an allocation of radio resources to user equipment, UE, devices in a communication system such that radio resources assigned to one UE device are non-orthogonal to radio resources assigned to another UE device wherein signals from multiple UE devices may be received at a base station using the same radio resources, wherein the base station determines a suitability for assigning non-orthogonal resources to a first UE device using a timing advance value measured from a random access message sent to the base station by said first UE device.

In a further aspect, the invention provides a method of controlling a mobile communication system operating in a non-orthogonal multiple access mode in which two or more user equipment, UE, devices transmit signals to a base station using the same radio resources, a first UE device transmitting signals according to a normal power mode and a second UE device transmitting signals according to a high power mode wherein the second UE is arranged to transmit a power headroom value to the base station and wherein if the power headroom value is determined by the base station to be at or below a minimum value the base station performs one of assigning orthogonal radio resources to the second UE device, changing a modulation and coding scheme to a scheme having a lower signal to interference and noise ratio and performing a handover of the second UE device to a different base station.

The invention describes a method that enables the mobile communication network and the mobile devices to use the same resource multiple times simultaneously in the uplink direction. The solution is designed to have no UE impact, such that the network operator can easily enhance his network without the need to wait for enhanced mobile devices.

An entity of the mobile communication system (e.g. the eNB) is enabled with the following:
The eNB obtains a rough path loss value for each UE from a timing advance, TA, value calculated from the random access preamble. The TA value is already calculated by the eNB based on a random access preamble received at initial network access or subsequent RACH accesses. This is advantageous, as no additional measurement is required and the value is available before link establishment. The rough path loss is used to categorise the UEs, for example "near UE" or "far UE". With the rough path loss, it is possible to find matching NOMA partners and applicable modulation and coding scheme and to decide about the NOMA applicability of each UE.

The eNB calculates a NOMA Power offset value "P_NO" for the reception power of the UEs that use the same resources (i.e. between UEs of the same NOMA group) and assigns different power modes to the UEs. In case of two UEs per NOMA group it assigns "normal power mode" to a first UE and a "high power mode" to a second UE. The reception power of the normal power mode UE is unchanged compared to normal operation (i.e. operation with orthogonal resources). The target reception power of the high power mode UE is about P_NO higher. The NOMA Power Offset P_NO is calculated based on a modulation and coding scheme, MCS, assigned to the high power mode UE. It is at least as high as the required SINR for the assigned MCS. The eNB assigns a different transmit power mode to each device within a NOMA group, e.g. a normal power mode and a high power mode in case of two UEs per NOMA group. The selection of the UE that is assigned to the normal power mode (i.e. the mode with lowest transmit power) is done based on the likelihood that the UE moves towards the cell edge. The UE that will most likely move towards the cell edge will be assigned to the normal power mode.

The eNB assigns an MCS for the high power mode UE based on the "NOMA Power Headroom" (P_HN). This value is calculated by the eNB from the rough path loss value of the high power mode UE, from the noise floor of the eNB and from the target SINR of the normal power mode UE.

In case a first UE requests uplink resources and the eNB decides to assign NOMA resources that are already in use by a second UE and to assign the normal power mode to the first UE, there is a need to re-configure the ongoing uplink connection of the second UE, i.e. to change from normal power mode to high power mode. The eNB is enabled, to change the transmit power mode of an ongoing uplink connection of a second UE due to an establishment of a NOMA connection to a first UE and to signal the required re-configuration parameters to the second UE. Therefore, the new transmit power of the second UE is calculated by considering the target SINR value of the first and of the second UE.

The UEs that are assigned to the high power mode have a reduced maximum transmission range compared to normal UEs. Therefore, the normal handover procedure may fail and there is a risk that the connections break unintentionally. To avoid such breaks, the eNB is enabled to configure a special (e.g. earlier than normal) power headroom reporting for the high power mode UEs. The power headroom measurement and reporting is configured typically such that the UEs send a power headroom report if the path loss in the downlink exceeds a certain threshold. This threshold is for high power mode UEs about P_NO smaller than for the normal power mode UEs, therefore the report is sent earlier when the path loss increases and more often. Based on the power headroom report, the eNB may decide to change the MCS to be more robust, or to change the multiple access mode of the affected high power mode UE to orthogonal operation, i.e. to assign normal orthogonal resources. Further it may decide to hand over the connection to another cell if the power headroom falls below the configured threshold.

The general benefit of applying NOMA in the uplink is an increased system throughput which will result in a higher average data rate per user and therefore in an enhanced user experience.

Embodiments of the invention will now be described, by way of example only, with reference to the accompanying drawings in which:

    Fig. 1 shows a message flow chart for configuring a NOMA connection;
    Fig. 2 shows a conventional diagram of transmit power varying with UE separation;
    Fig. 3 shows an adaptation of the Fig. 2 diagram for NOMA operation;
    Fig. 4 shows a message flow chart for the assignment of NOMA resources;
    Fig. 5 shows a message flow chart for re-configuring an uplink connection; and
    Fig. 6 illustrates a flow chart for establishing a NOMA connection.

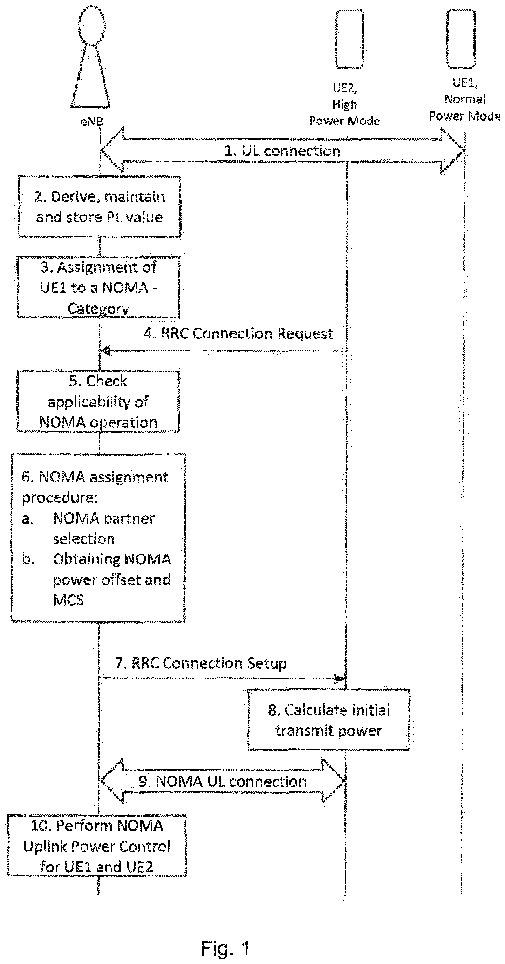

Referring to Fig. 1, there is shown a flow chart illustrating an establishment of a NOMA connection involving two UEs, UE1 and UE2 and an eNB. UE1 is situated close to a cell boundary whereas UE2 is situated closer to the eNB. A mobile communication system according to LTE is assumed, but any other mobile communications system could also be used.

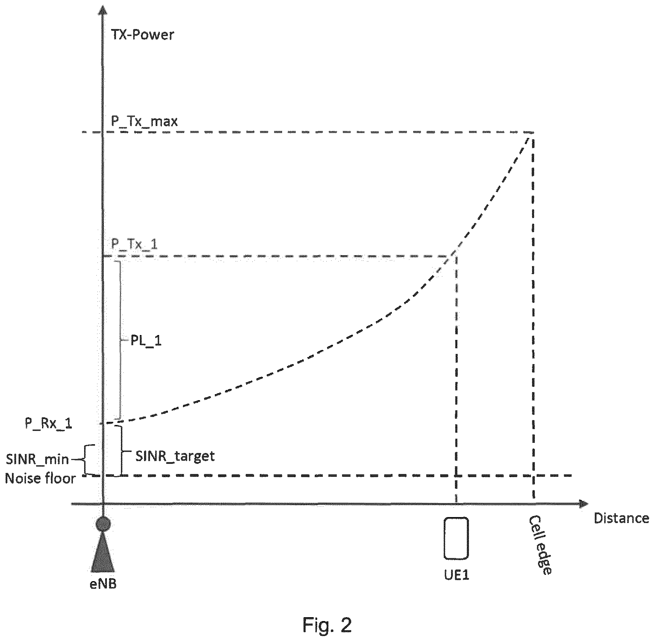

In a first stage, UE1 establishes a normal uplink connection to the eNB (i.e. by using orthogonal resources). Power control is done as usual for an LTE uplink. The initial transmit power is calculated by the UE based on measurements of the downlink reference signals and some parameters (path loss compensation factor alpha and Power Offset P_O) signalled by the eNB. After a first transmission, the eNB obtains regularly a SINR value of the transmission, compares this value with a target SINR value (SINR_target in Fig. 2) and commands the UE to change the transmit power in order to derive a SINR value closer to the target SINR value. The SINR_target value is selected by the eNB to be slightly above the minimum required SINR value for the selected modulation and coding scheme. See Fig. 2 and Table 3.

As shown in a second stage, the eNB derives, stores and maintains a rough uplink path loss value for all UEs with an uplink connection. The initial path loss is derived from the timing advance, TA, value. The TA value is calculated by the eNB based on the random access preamble received at initial network access or subsequent RACH accesses and signalled to the UE. The UE adjusts its transmit timing accordingly and this will lead to a synchronous reception at the eNB. Table 1 shows an example for the mapping of TA values to path loss values for frequency bands 1.8 GHz and 3.5 GHz. The TA value is updated during the connection by using the power control commands or by using measurements reports sent by the UE. TA values correspond generally to path loss values shown for the 1.8 GHz frequency band and the 3.5 GHz frequency band. TA value 1 correspond to = 521 microseconds. The maximum value is 1228 and corresponds to = 667,67 milliseconds. In this example the UE1 has currently a path loss within the range of 101 to 110 dB.

Table 1:

| TA-Value | Path loss @ 1,8GHz | Path loss @ 3,5 GHz |
|---|---|---|
| 0 ...2 | < 80 dB | < 90 dB |
| 3 ... 7 | 81 ... 90dB | 91 ... 100 dB |
| 8 ... 18 | 91 ... 100 dB | 101 ... 110 dB |
| 19 ... 51 | 101 ... 110dB | 111 ... 120 dB |
| 52 ... 154 | 111 ... 120 dB | 121 ... 130 dB |
| 155 ... 300 | 121 ... 130 dB | 131 ... 140 dB |
| >300 | > 130 dB | > 140 dB |

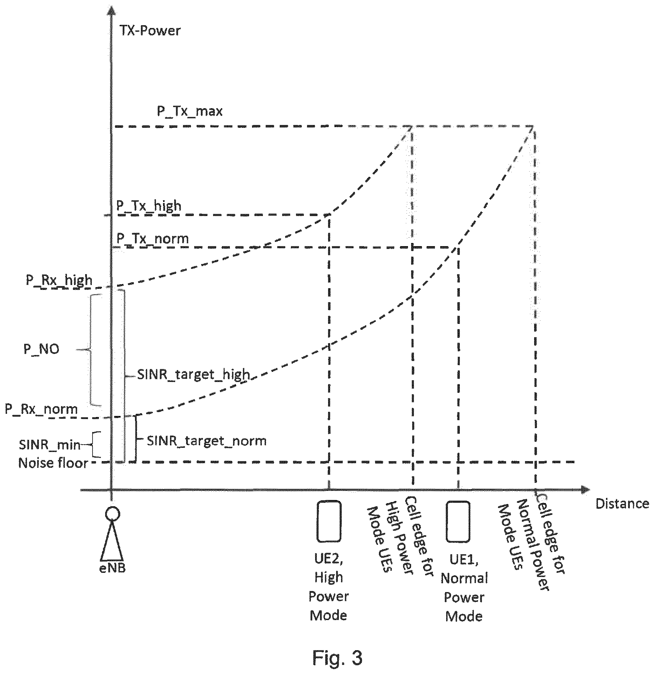

The eNB assigns the UEs to a NOMA-category according to the uplink path loss range: category "near UE", if the PL range is above a threshold and category "far UE" otherwise. An example is shown in Table 2. The threshold is for example selected to ensure that UEs of category "near UE" are closer to the eNB than a cell edge for UEs using the "High Power Mode" (described below with reference to Fig. 3). Within each category, the entries may be sorted in increasing order, i.e. starting with the UE with the lowest PL range. This example shows two categories and enables simultaneous NOMA-operation of two UEs. Maintaining three, four, or more categories will allow for simultaneous operation of three, four or more UEs. In the example of Fig. 1, UE1 is assigned to the NOMA-category "far UE", as the PL range is 101 ... 110 db and the threshold is 100 dB.

Table 2

| Near UE (PL ≤100 dB) | | Far UE (PL > 100 dB) | | |
|---|---|---|---|---|
| UE-ID | PL range | UE-ID | PL range | |
| UE3 | 81 ... 90dB | UE4 | 101 ... 110 dB | NOMA Group #2 |
| UE6 | 81 ... 90dB | UE7 | 101 ... 110 dB | |
| UE2 | 81 ... 90 dB | UE1 | 101 ... 110 dB | NOMA Group #1 |
| UE5 | 91 ... 100 dB | UE8 | 111 ... 120 dB | |
| ... | ... | ... | ... | |

Table 2 shows a table in which the eNB has grouped UEs together into NOMA groups, in each case a "near UE" and a "far UE"

In a fourth stage, UE2 requests uplink resources. As for UE1 in stage 3, the eNB assigns the UE to a NOMA category according to the PL range. The TA value for UE2 is calculated as 9 and the path loss range is therefore estimated with 91 to 100 dB (cf. Table 1; 1,8 GHz Band). UE2 is assigned to NOMA-category "near UE". This example assumes that the UE was in idle mode. In another embodiment the UE may wants to re-establish a connection after a radio link failure and send a "RRC connection re-establishment request". Also any other messages that aims at changing or adding a RRC connection in uplink direction can trigger the next step.

In a fifth stage the eNB checks the applicability of NOMA operation for UE2, i.e. whether the eNB has enough calculation resources to perform NOMA operation (e.g. to perform interference cancellation) and whether assignment of orthogonal resources is not in fact required (e.g. because the current amount of unused resources allows assignment of orthogonal resources) or not possible (e.g. no NOMA partner available as all other UEs with ongoing connection are already assigned to NOMA resources or as the requesting UE is the only UE with an active uplink connection).

Based on the positive check in the previous step, in a sixth stage, the eNB decides to assign NOMA UL resources to UE2 and performs a NOMA assignment procedure (described later in more detail).

In a seventh stage, the eNB transmits a RRC Connection Setup message to UE2. Included are values for uplink power control P_O and alpha known from the LTE standards. However, rather than the conventional P_O value, the eNB inserts a power offset value for the NOMA resource, P_NO, in the conventional data field for P_O.

The UE calculates the initial transmit power P_init with the following formula. This is done as usual for the LTE PUSCH, i.e. the UE is not aware that NOMA is applied in the uplink:

$$P\_init = 10 \cdot \log 10\ M + P\_0 + alpha \times PL\ [dBm]$$

where

M: is the bandwidth in multiples of 12 subcarriers as scheduled by the eNB
P_0: is the power offset calculated by the eNB for the NOMA resource (P_NO)
alpha: is a path loss compensation factor. It is a three-bit cell specific parameter in the range [0-1] signaled by the eNB to the UE;
PL: is the downlink path loss estimate and is calculated in the UE based on the downlink reference signals as usual for LTE;

The UE then transmits uplink data with the calculated transmit power

The eNB performs power control such that SINR_target_high is obtained for UE2 and SINR_target_norm for UE1. The power control is done as usual for LTE, i.e a "power up" command is sent to the UE if the measured SINR value is below the SINR_target, and "power down" otherwise. Further the eNB applies successive interference cancellation, i.e. it starts decoding of the data from the high power mode UE and removes the signal portion of the high power mode UE from the received signal. After that, the data of the normal power mode signal is decoded.

The example above assumes, that the high power mode is assigned to near UEs. This is the preferred arrangement, as it enables the far UEs to operate at the normal cell edge. In another embodiment, the high power mode is assigned to far UEs. This will be the best choice for the case that the near UE will more likely move to the cell edge than the far UE.

The following describes the selection of a partner UE for NOMA operation.

Referring to Fig. 2, there is shown a graph of transmit power of a UE against distance of the UE from a base station, in this case an eNB. The transmit power is that required such that the power received by the base station, P_Rx_1, is at a desired level SINR_target above a noise floor. The SINR_target is above a minimum SINR value, SINR_min. At a cell edge, the required transmit power reaches the maximum transmit power of the UE, P_Tx_max.

Fig. 3 illustrates the situation where the eNB has initiated NOMA operation in respect of the two UEs, UE1 and UE2. UE1 operates in the normal power mode and accordingly it has a transmit power/distance characteristic corresponding to that of Fig. 2. UE2 operates in the high power mode such that its signal is received at the eNB at a value P_Rx_high which is higher than that of the normal power mode UE, P_Rx_norm, by an amount P_NO. Because UE2 operates at a higher transmit power, the cell edge is correspondingly closer to the base station.

It is a basic principle of NOMA, that each data flow of the same NOMA resource has to be received with a different power level. In case of two UEs using the same NOMA resource, the lower target SINR value is approximately the same as for UEs using orthogonal resources. Therefore UEs that are assigned to the lower target SINR value will use the same transmit power as for orthogonal resources and the UE's transmit range is the same as for UEs using orthogonal resources, i.e. they are able to communicate with the eNB until the normal cell edge (Fig. 3, "Cell edge for normal power mode UEs").

In contrast to this, the higher of the two reception power values (i.e. P_Rx_high) requires the respective UE to transmit with a higher power compared to orthogonal UEs. Therefore, the UEs that are assigned to the high power mode have a smaller transmission range as the maximum transmit power is reached at a smaller distance to the eNB (assuming same maximum TX power for all UEs), i.e. the cell edge for UEs assigned to the high power mode is closer to the eNB (Fig. 3. "Cell edge for high power mode UEs").

Due to range constraints of UEs assigned to the high power mode, it is reasonable to assign far UEs to the normal power mode. In order to maximise the system throughput, the selection of NOMA partner UEs is done, so that firstly a far UE is paired in the same NOMA group with a near UE. Secondly, if no far UEs are left for NOMA resource assignment, two near UEs could be paired in the same NOMA group. Pairing of two far UEs is not possible. If two far UEs request uplink resources and no near UEs are available for pairing, they have to use orthogonal resources.

In the example of Fig. 1, the second requesting UE, UE2, is a "near UE". The easiest way to find an appropriate partner is to select the UE from the other NOMA-category at the same position as UE2 within the ordered table. In this case UE1 and UE2 in Table 2 are paired to NOMA-group #1. Pairing partners can be chosen differently, the same position in the ordered table as described is just an example that has been proven advantageous in various simulations in literature. Pairing strategies are not the subject of this invention, however the pairing of far UEs only with near UEs is a principle that has to be followed in order for this invention work. Near UEs can, however, be paired with other near UEs if enough power headroom is available.

The following describes obtaining the NOMA Power Offset P_NO and modulation and coding scheme MCS.

The NOMA principle requires, that the different signals, which use the same resources, have a certain signal power offset in the receiver. Therefore, P_NO is defined as the offset of the reception power from the UEs of the same NOMA-group, whereas the reception power of the UE using the normal power mode "P_Rx_norm" is approximately the same as for orthogonal resources and the reception power of the UE using the high power mode "P_Rx_high" should be about P_NO higher than "P_Rx_norm" (see Fig. 3). As the signal from the normal power mode UE is the most significant source of interference for the signal of the high power mode UE and as demodulation of the data from the high power mode UE should be possible without the need of interference cancellation, P_NO should be at least in the range of the minimum required SINR for the selected modulation and coding scheme of the high power mode UE. Table 3 shows an example of the mapping between SINR values and modulation and coding schemes.

Table 3

| Modulation and Coding Scheme | | |
|---|---|---|
| Modulation | FEC Rate | SINR-Range |
| QPSK | 1/2 | < 8dB |
| QPSK | 3/4 | 8 -9 dB |
| 16 QAM | 1/2 | 10 - 14dB |
| 16 QAM | 3/4 | 15- 16dB |
| 64 QAM | 1/2 | 17 - 22 dB |
| 64 QAM | 3/4 | 23- 24 dB |
| 245 QAM | 1/2 | 25 -27 dB |
| 245 QAM | 3/4 | >27 dB |

The eNB firstly calculates the NOMA power headroom P_HN according to the formula below. P_HN is the difference of the maximum transmit power of UE2 and the minimum required transmit power for the given path loss. The eNB selects a modulation and coding scheme (MCS) for the requesting UE (UE2) matching the needs of the requested service and the NOMA power headroom. A higher P_HN range allows for a higher target SINR. I.e. a UE with higher P_HN range could use a higher order modulation and coding scheme. In addition, the target SINR value of UE1 is considered for MCS selection of UE2, as the maximum possible target SINR of UE2 is reduced by the target SINR value of UE1. The P_HN is calculated by the eNB with the following formula:

$$P\_HN = P\_Tx\_max\ [dBm] - P\_Noise\ [dBm] - PL\_UL\ [dB] - SINR\_target\_norm\ [dB]$$

Where

P_Tx_max:        is the maximum transmit power of the UE in dBm

P_Noise:        is the noise floor as experienced by the eNB in dBm

PL:        is the uplink path loss of the high power mode UE in dB. The rough PL range of table 2 is used

SINR_target_norm:    is the target SINR value for the normal power mode UE in dB

In the example of Fig. 1, P_HN is calculated as being in the range 19 ... 28 dB. The eNB selects a MCS from Table 3 with a smaller SINR-Range than P_HN, in order to have remaining transmit power in the UE to allow for movement in direction to the cell edge. The eNB selects 64QAM with a FEC (Forward Error Correction) Rate of 1/2. The NOMA power offset value (P_NO in Fig. 3) is selected to be within the range of the selected MCS and to be smaller than the NOMA power headroom P_HN. In this example P_NO is selected to be 18dB.

In the embodiment described above an aspect of the invention is concerned with the assignment of NOMA resources in the case that a resource requesting UE (UE2) is assigned to the high power mode, while a UE with an ongoing uplink connection (UE1) remains in normal power mode.

In another embodiment, it is assumed a UE requesting resources (UE3) is assigned to the normal power mode, while a UE with an ongoing connection (UE4) is assigned to the high power mode, i.e., the ongoing connection of UE4 is changed due to the decision of the eNB to use NOMA resources for UE3.

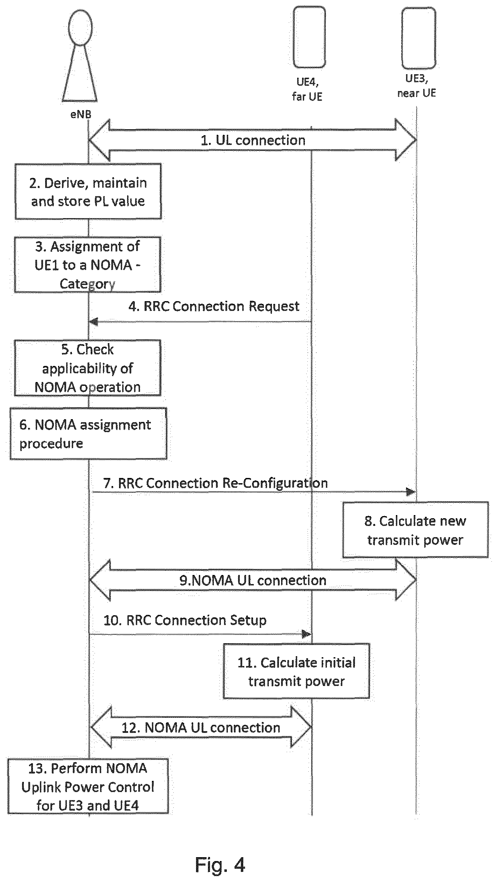

The following procedure is applied for assignment of NOMA resources in the uplink (depicted in Fig. 4).

1. UE3 has an ongoing uplink connection.

2. The eNB calculates the rough UL path loss range as 81 to 90 dB (cf. Table 2)

3. The eNB assigns category "near UE" to UE3

4. UE3 requests uplink resources. The eNB calculates the rough UL path loss range as 101 to 110 dB and assigns category "far UE"

5. The eNB positively checks the applicability of NOMA operation for UE4

6. The eNB perform the NOMA assignment procedure:

> a. As UE4 is a far UE, UE3 from the category "near UE" is selected as NOMA partner (NOMA-group #2 in table 2)
> b. The eNB decides to assign the high power mode to the near UE (UE3) and the normal power mode to far UE (UE4). It selects a MCS, SINR_target_norm and appropriate power control parameters (P_O and alpha) for UE4 as usual for UEs using orthogonal resources.
> c. It then calculates the NOMA power headroom (P_HN) of UE3 according to the formula given above as 21...30dB. The MCS used for the ongoing UL connection prior the NOMA resource assignment is 64 QAM with FEC Rate 1/2. As the required SINR for this MCS (c.f. Table 3) fits to the calculated P_HN, the eNB will use it for the re-configured connection with UE3. The NOMA power offset (P_NO) is selected by the eNB in this example as 20 dB.

7. The eNB re-configures the ongoing UL connection of UE3 by transmission of a "RRC connection Re-configuration" message. Included are beside other the power control parameters P_O and alpha and the selected MCS, whereas the eNB transmits P_NO in the P_O field of the message.

8. UE3 re-configures the uplink connection according to the received message e.g. it calculates a new value for the transmit power.

9. UE3 uses a NOMA enabled uplink connection

10. The eNB configures the new uplink connection of UE4 by transmission of a "RRC connection Setup" message. Included are beside other the power control parameters P_O and alpha and the selected MCS. These parameters where selected in step 6.b as done for orthogonal resource configuration.

11. UE4 configures the uplink transmission accordingly and calculates the initial transmit power according to the formula given above.

12. UE4 uses a NOMA enabled uplink connection

13. The eNB performs power control such that SINR_target_high is obtained for UE3 and SINR_targed_norm for UE4. The power control is done as usual for LTE, i.e. a "power up" is commanded to the UE if the measured SINR value is below the SINR_target, and "power down" otherwise. Further the eNB applies successive interference cancellation, i.e. it starts decoding of the data from the high power mode UE and removes the signal portion of the high power mode UE from the received signal. After that, the data of the normal power mode were decoded.

A further aspect of the invention provides for a procedure to change a multiple access mode of a high power mode UE if the UE is approaching a high power mode cell edge.

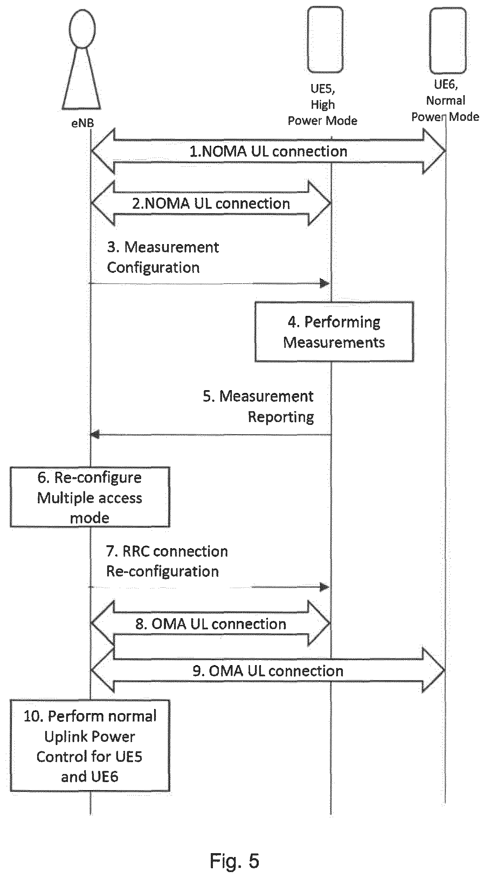

Due to the reduced maximum transmission range of high power mode UEs, a mechanism is required, to prevent that the uplink connection will be interrupted unintentionally. The procedure to avoid such interruptions is depicted in Fig. 5 and described below. For the purposes of illustration, it is assumed that a UE, UE5 is approaching a limit of high power mode operating range, with UE5 being paired with a second UE, UE6, in NOMA mode operation.

1. UE6 is configured with NOMA uplink resources in normal power mode

2. UE5 is configured with NOMA uplink resources in high power mode

3. The eNB configures a measurement and a reporting event for UE5 to avoid connection interruption due to the high power mode range constraints. In this example it configures the UE to periodically measure the power headroom, i.e. the remaining available transmit power. In addition, it configures a minimum power headroom. For the case, that the measured power headroom falls below the configured minimum power headroom, UE5 should transmit a measurement report to the eNB.

4. UE5 periodically measures the power headroom as instructed by the eNB, while it moves away from the eNB. Than it detects that the measured power headroom is below the minimum power headroom. This triggers the next step.

5. UE5 transmits the last measured power headroom value to the eNB.

6. The eNB uses the received value to decide about re-configuration of the uplink connection. There are 3 options for re-configuration:

    a. Assign orthogonal resources and normal power mode. This change will allow operation of UE5 up to the normal cell edge.

    b. Change MCS to a scheme that requires less SINR. This change will enhance the maximum transmission range compared to the former operation mode, but will not enable operation up to the normal cell edge.

    c. Request measurement results from UE5 about neighbouring cells in order to decide to hand over the connection.

In this example, the eNB decides to assign orthogonal resources to UE5. It selects a MCS and the required SINR_target_norm.

7. The eNB transmits a RRC connection re-configuration message to UE5 and assigns orthogonal resources and the normal power mode. Included are beside other the power control parameters P_O and alpha and the selected MCS.

8. UE5 applies the received changes and uses orthogonal resources for the uplink connection.

9. UE6 still uses the same configuration for the uplink. From an eNB perspective this connection is a normal (orthogonal) connection

10. The eNB perform normal uplink power control for UE5 and UE6.

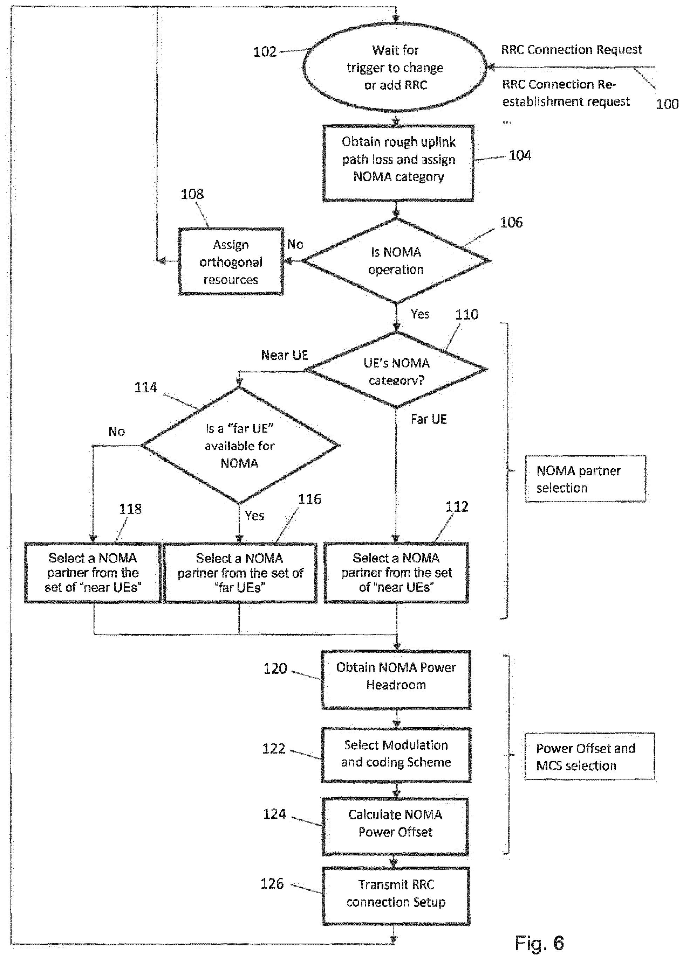

Fig. 6 is an exemplary flow chart illustrating the establishment and continuation of NOMA operation using the invention.

An incoming RRC connection request or an RRC connection re-establishment request 100 acts as a trigger to exit a state "wait for trigger to change or add RRC connection" 102. As a result, the eNB obtains a rough uplink path loss and assigns a NOMA category in box 104. The eNB then decides in stage 106 if NOMA operation is possible. If not, orthogonal resources are assigned as shown by box 108 and the eNB returns to the state 102.

If NOMA operation is possible, the eNB determines in step 110 a NOMA category of the UE causing the trigger, either "far UE" or "near UE". If the triggering UE is a "far UE", the eNB selects in stage 112 a NOMA partner from the set of UEs classed as "near UEs". If the UE causing the trigger is a "near UE", in step 114 the eNB determines if a "far UE" is available for NOMA operation and if one or more is available, in step 116, a NOMA partner is selected from the set of "far UEs". If in step 114 it is determined that only "near UEs" are available, in step 118 a NOMA partner is selected from the set of "near UEs".

Once a NOMA partner has been selected, the NOMA power headroom is determined in step 120. Once the power headroom has been determined, the appropriate modulation and coding scheme is chosen in step 122 and the NOMA power offset is calculated in step 124. The RRC connection setup message is transmitted to the UE in step 126 and the eNB returns to the state 102.

**Claims**

1. A method for determining an allocation of radio resources to a first user equipment, UE, device in a communication system such that radio resources assigned to the first UE device are non-orthogonal to radio resources assigned to a second UE device wherein, after such assignment, signals from the first and second UE devices may be received at a base station using the same radio resources, **characterized in that** the base station determines a suitability for assigning the non-orthogonal radio resources to the first UE device using a timing advance value measured from a random access message sent to the base station by said first UE device.

2. The method according to claim 1, wherein in order to form a group of UE devices assigned the same radio resources, the group comprising the first UE device and the second UE device, the timing advance value is used to generate an estimate of path loss between the first UE device and the base station and the estimate of the path loss is used to select the second UE device based on a path loss previously determined between the second UE device and the base station.

3. The method according to claim 2, wherein depending on the timing advance value of the first UE device, the first UE device is classified (110) as either a far UE device or a near UE device and in the case that the first UE device is a far UE device, the base station determines (112) if a near UE device is available as the second UE device.

4. The method according to claim 3, wherein if the first UE device is classified as a near UE device, the base station attempts to identify (116) a far UE device as the second UE device and in the absence of a suitable far UE device a near UE device is selected (118) as the second UE device.

5. The method according to any preceding claim, wherein following an identification of a UE device suitable for using the same radio resources as the first UE device, a power headroom value is determined.

6. The method according to claim 5, wherein the power headroom value is used to determine a suitable modulation and coding scheme.

7. The method according to claim 3, wherein if the second UE device is a near UE device, the base station performs a radio resource control connection re-configuration in respect of the second UE device in order to raise a transmission power of the second UE device.

8. The method according to claim 7 wherein the radio resource control connection re-configuration is performed in advance of a radio resource control connection set up in respect of the first UE device.

9. A base station adapted to determine an allocation of radio resources to a first user equipment, UE, device in a communication system such that radio resources assigned to the first UE device are non-orthogonal to radio resources assigned to a second UE device such that the base station is configured to receive signals from the first and the second UE devices using the same radio resources, **characterized in that** the base station is arranged to determine a suitability for assigning non-orthogonal resources to the first UE device using a timing advance value measured from a random access message sent to the base station by said first UE device.

**Patentansprüche**

1. Verfahren zum Bestimmen einer Zuteilung von Funkressourcen zu einer ersten Anwendergerätvorrichtung, UE-Vorrichtung, in einem Kommunikationssystem, derart, dass Funkressourcen, die der ersten UE-Vorrichtung, zugewiesen werden, nicht orthogonal zu Funkressourcen, die einer zweiten UE-Vorrichtung, zugewiesen werden, sind, wobei nach einer solchen Zuweisung Signale von der ersten und der zweiten UE-Vorrichtung an einer Basisstation, unter Verwendung derselben Funkressourcen empfangen werden können, **dadurch gekennzeichnet, dass** die Basisstation, eine Eignung zum Zuweisen der nicht orthogonalen Funkressourcen zu der ersten UE-Vorrichtung, unter Verwendung eines Zeitvorsprungwertes, der aus einer Zufallszugriffsnachricht gemessen wird, die an die Basisstation durch die erste UE-Vorrichtung gesendet wird, bestimmt.

2. Verfahren nach Anspruch 1, wobei der Zeitvorsprungwert, um eine Gruppe von UE-Vorrichtungen zu bilden, denen dieselben Funkressourcen zugewiesen werden, wobei die Gruppe die erste UE-Vorrichtung und die zweite UE-Vorrichtung umfasst, verwendet wird, um eine Schätzung eines Wegverlustes zwischen der ersten UE-Vorrichtung und der Basisstation zu erzeugen, und die Schätzung des Wegverlustes verwendet wird, um die zweite UE-Vorrichtung anhand eines Wegverlustes, der vorher zwischen der zweiten UE-Vorrichtung und der Basisstation bestimmt wurde, auszuwählen.

3. Verfahren nach Anspruch 2, wobei abhängig von dem Zeitvorsprungwert der ersten UE-Vorrichtung die erste UE-Vorrichtung entweder als eine entfernte UE-Vorrichtung oder eine nahe UE-Vorrichtung eingeordnet wird (110) und in dem Fall, in dem die erste UE-Vorrichtung eine entfernte UE-Vorrichtung ist, die Basisstation (112) bestimmt, ob eine nahe UE-Vorrichtung als die zweite UE-Vorrichtung verfügbar ist.

4. Verfahren nach Anspruch 3, wobei dann, wenn die erste UE-Vorrichtung als eine nahe UE-Vorrichtung eingeordnet wird, die Basisstation versucht, eine entfernte UE-Vorrichtung als die zweite UE-Vorrichtung zu identifizieren (116), und bei Fehlen einer geeigneten entfernten UE-Vorrichtung eine nahe UE-Vorrichtung als die zweite UE-Vorrichtung ausgewählt wird (118).

5. Verfahren nach einem vorhergehenden Anspruch, wobei folgend auf eine Identifikation einer UE-Vorrichtung, die geeignet ist, dieselben Funkressourcen wie die erste UE-Vorrichtung zu verwenden, ein Leistungsreservewert bestimmt wird.

**6.** Verfahren nach Anspruch 5, wobei der Leistungsreservewert verwendet wird, um ein geeignetes Modulations- und Codierschema zu bestimmen.

**7.** Verfahren nach Anspruch 3, wobei dann, wenn die zweite UE-Vorrichtung eine nahe UE-Vorrichtung ist, die Basisstation eine Umkonfiguration einer Funkressourcensteuerverbindung in Bezug auf die zweite UE-Vorrichtung ausführt, um eine Übertragungsleistung der zweiten UE-Vorrichtung zu erhöhen.

**8.** Verfahren nach Anspruch 7, wobei Umkonfiguration der Funkressourcensteuerverbindung im Voraus vor einer Funkressourcensteuerverbindungseinstellung in Bezug auf die erste UE-Vorrichtung ausgeführt wird.

**9.** Basisstation, die ausgelegt ist, eine Zuteilung von Funkressourcen zu einer ersten Anwendergerätvorrichtung, UE-Vorrichtung, in einem Kommunikationssystem derart zu bestimmen, dass Funkressourcen, die der ersten UE-Vorrichtung, zugewiesen werden, nicht orthogonal zu Funkressourcen, die einer zweiten UE-Vorrichtung, zugewiesen werden, sind, sodass die Basisstation konfiguriert ist, Signale von der ersten und der zweiten UE-Vorrichtung unter Verwendung derselben Funkressource zu empfangen, **dadurch gekennzeichnet, dass** die Basisstation ausgelegt ist, eine Eignung zum Zuweisen nicht orthogonaler Funkressourcen zu der ersten UE-Vorrichtung, unter Verwendung eines Zeitvorsprungwertes, der aus einer Zufallszugriffsnachricht gemessen wird, die an die Basisstation durch die erste UE-Vorrichtung gesendet wird, zu bestimmen.

## Revendications

**1.** Procédé de détermination d'une attribution de ressources radio à un premier dispositif d'équipement utilisateur, UE, dans un système de communication de telle sorte que des ressources radio attribuées au premier dispositif UE, soient non orthogonales à des ressources radio attribuées à un second dispositif UE, dans lequel, après une telle attribution, des signaux provenant des premier et second dispositifs UE peuvent être reçus au niveau d'une station de base, utilisant les mêmes ressources radio, **caractérisé en ce que** la station de base, détermine une adéquation d'attribution des ressources radio non orthogonales au premier dispositif UE, à l'aide d'une valeur d'avance de synchronisation mesurée à partir d'un message d'accès aléatoire envoyé à la station de base par ledit premier dispositif UE.

**2.** Procédé selon la revendication 1, dans lequel afin de former un groupe de dispositifs UE auxquels sont attribuées les mêmes ressources radio, le groupe comprenant le premier dispositif UE et le second dispositif UE, la valeur d'avance de synchronisation est utilisée pour générer une estimation de perte de trajet entre le premier dispositif UE et la station de base et l'estimation de la perte de trajet est utilisée pour sélectionner le second dispositif UE sur la base d'une perte de trajet déterminée précédemment entre le second dispositif UE et la station de base.

**3.** Procédé selon la revendication 2, dans lequel en fonction de la valeur d'avance de synchronisation du premier dispositif UE, le premier dispositif UE est classé (110) soit comme dispositif UE distant, soit comme dispositif UE proche et si le premier dispositif UE est un dispositif UE distant, la station de base détermine (112) qu'il existe ou non un dispositif UE proche comme second dispositif UE.

**4.** Procédé selon la revendication 3, dans lequel si le premier dispositif UE est classé comme dispositif UE proche, la station de base essaye d'identifier (116) un dispositif UE distant comme second dispositif UE et en l'absence d'un dispositif UE distant convenable un dispositif UE proche est sélectionné (118) comme second dispositif UE.

**5.** Procédé selon n'importe quelle revendication précédente, dans lequel après une identification d'un dispositif UE convenable pouvant utiliser les mêmes ressources radio que le premier dispositif UE, une valeur de marge de puissance est déterminée.

**6.** Procédé selon la revendication 5, dans lequel la valeur de marge de puissance est utilisée pour déterminer un mécanisme de modulation et de codage adapté.

**7.** Procédé selon la revendication 3, dans lequel si le second dispositif UE est un dispositif UE proche, la station de base réalise une reconfiguration de connexion de commande de ressources radio relativement au second dispositif UE afin d'augmenter une puissance de transmission du second dispositif UE.

8. Procédé selon la revendication 7, dans lequel la reconfiguration de connexion de commande de ressources radio est réalisée avant l'établissement d'une connexion de commande de ressources radio relativement au premier dispositif UE.

9. Station de base, adaptée pour déterminer une attribution de ressources radio à un premier dispositif d'équipement utilisateur, UE, dans un système de communication de telle sorte que des ressources radio attribuées au premier dispositif UE, soient non orthogonales à des ressources radio attribuées à un second dispositif UE, de telle sorte que la station de base soit configurée pour recevoir des signaux à partir des premier et second dispositifs UE utilisant les mêmes ressources radio, **caractérisée en ce que** la station de base est agencée pour déterminer une adéquation d'attribution des ressources radio non orthogonales au premier dispositif UE, à l'aide d'une valeur d'avance de synchronisation mesurée à partir d'un message d'accès aléatoire envoyé à la station de base par ledit premier dispositif UE.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015029729 A1
- US 20140328298 A1
- US 20150358971 A1
- WO 2014025292 A1
- WO 2015167714 A1

### Non-patent literature cited in the description

- Study on Downlink Multiuser Superposition Transmission for LTE. *3GPP document RP-151100*
- **ANASS BENJEBBOUR et al.** Proceedings 2013 International Symposium on Intelligent Signal Processing and Communication Systems. IEEE, 770-774